# EUROPEAN PATENT APPLICATION

(11) **EP 4 047 675 A1**
(43) Date of publication of application: **24.08.2022**
(21) Application number: 21158721.7
(22) Date of filing: 23.02.2021
(51) Int. Cl.: H01M 4/04, H01M 4/134, H01M 10/052

(54) **A CUTTING SYSTEM, CONTROL METHOD, CONTROLLER IN A LI-ION BATTERY WINDING MACHINE AND MEDIUM**

(71) Applicant: Siemens Aktiengesellschaft, 80333 München (DE)
(72) Inventor: MAI, Zhu Hua, Guangzhou, Guangdong 511400 (CN)
(74) Representative: Isarpatent

(57) **Abstract**

Examples of the present disclosure provide a cutting system, control method, controller in a Li-ion battery winding machine and medium. The system includes: a cutter assembly, a controller, a first sensor and a second sensor; the first sensor is used to detect electrode leads on the electrode material and output electrode lead signals; the second sensor is used to detect a mark hole on the electrode material and output a mark signal; the controller is used to receive the electrode lead signals and the mark signal, and determine the last two electrode leads according to the number of detected electrode lead signals, and according to the distance value between the last two electrode leads, determine whether the last electrode lead is the correct electrode lead, determine a distance between the mark hole and the cutter assembly according to the last correct electrode lead and / or the mark signal, and control the cutter assembly to locate and cut the electrode material according to the distance between the mark hole and the cutter assembly. The technical scheme in the examples of the application can improve the cutting accuracy of the electrode material.

## Description

### FIELD

The present disclosure relates to battery manufacturing technologies, and more particularly, to a cutting system, a control method, a controller in a li-ion battery high-speed winding machine and a computer-readable storage medium.

### BACKGROUND

A Li-ion battery core usually includes positive electrode material and negative electrode material which are isolated from each other, in which a plurality of positive electrode leads are arranged on the positive electrode material and a plurality of negative electrode leads are arranged on the negative electrode material. The Li-ion battery core is made by winding the positive electrode material and the negative electrode material, and the plurality of positive electrode leads are stacked to form the positive end of the Li-ion battery core, and the plurality of negative electrode leads are stacked to form the negative end of the Li-ion battery core.

In the process of winding the Li-ion battery core, the electrode material will be cut when the actual length reach to the setting value. Through an external encoder installing on a roller, the actual length can be measured. However, the length of a power Li-ion battery is very long, and the winding speed is so fast that the position of the tension arm is always adjusted by the system, so it is impossible to ensure that the cutting accuracy of the electrode material is satisfied.

Therefore, those skilled in the art are still committed to finding other cutting solutions.

### SUMMARY

According to examples of the present disclosure, a cutting system, control method, controller in a li-ion battery high-speed winding machine and a computer-readable storage medium are provided to improve the cutting accuracy of the electrode material and the product qualification rate of the Li-ion battery core.

The cutting control system for the Li-ion battery high-speed winding machine provided by examples of the present disclosure includes: a cutter assembly and a controller, wherein the cutter assembly is constructed to cut electrode material; in addition, the system further comprises a first sensor and a second sensor set on a path through which the electrode material passes; the first sensor is constructed to detect electrode leads on the electrode material and output a detected electrode lead signal to the controller; the second sensor is constructed to detect a mark hole on the electrode material at the cutting position, and output a detected mark signal to the controller; the controller is constructed to receive the electrode material signal and the mark signal, determine the last two electrode leads according to the number of detected electrode lead signals, determine whether the last electrode lead is correct according to the distance value between the last two electrode leads, and determine the distance between the mark hole on the electrode material and the cutter assembly according to the last correct electrode lead and / or received mark signal; according to the distance between the mark hole and the cutter assembly, control the cutter assembly to position and cut the electrode material.

In an example, the last two electrode leads are located on both sides of the mark hole; or the last two electrode leads are located before the mark hole.

In an example, further comprises: an encoder and a rewinder axis; wherein, the encoder is constructed to measure the length of the electrode material passed during the process of winding the electrode material and provide a measured value to the controller; the electrode material is constructed to wind on the rewinder axis with the rotation of the rewinder axis; the controller is configured to count received electrode lead signals, and when a count value reaches a set value before receiving a mark signal, to obtain an actual distance value between the last two electrode leads according to measured values of the encoder corresponding to the last two electrode lead signals, when the difference between the actual distance value and a set distance value meets a first setting requirement, to determine the last electrode lead to be a correct electrode lead; according to the distance between the first sensor and the cutter assembly, and a predetermined position relationship between the mark hole and the last detected electrode lead, to calculate the distance between the mark hole and the cutter assembly; when receiving the mark signal before the count value reaches the set value, to obtain an actual length value of the electrode material before the mark hole according to the measured value of the encoder corresponding to the mark signal; when the difference between the actual length value and a set length value meets a second setting requirement, to take a distance between the second sensor and the cutter assembly as the distance between the mark hole and the cutter assembly; after obtaining the distance between the mark hole and the cutter assembly, according to a principle of making the cutting position corresponding to the mark hole stop within an effective movement range of a cutter compensation motor in the cutter assembly, to calculate a speed and an acceleration of the rewinder axis in the deceleration process according to the set running speed of the electrode material, and to control the rewinder axis to decelerate and stop according to the speed and acceleration; after the rewinder axis stops rotating, to determine a movement distance of the electrode material from the deceleration to the stop of the rewinder axis according to measured values of the encoder when the rewinder axis starts to decelerate and stops, and then gets a deceleration distance; to subtract the deceleration distance from the distance between the mark hole and the cutter assembly to obtain a compensation distance; to take the compensation distance as a positioning distance of the cutter compensation motor, and to indicate the cutter compensation motor to control the cutter assembly to move the compensation distance, clamp the electrode material and cut the electrode material.

In an example, further comprises: a mark hole detection window, which is set on the path through which the electrode material passes and corresponds to the position of the second sensor; the second sensor detects the mark hole on the electrode material through the detection window.

The cutting control method for the Li-ion battery high-speed winding machine provided by examples of the present disclosure includes: receiving an electrode lead signal, and counting received electrode lead signals; when a mark signal is received before a count value reaches a set value, determining a distance between a mark hole on electrode material of the Li-ion battery and a cutter assembly in the high-speed winding machine of the Li-ion battery according to the mark signal; otherwise, when the count value reaches the set value, determining whether the last electrode lead is a correct electrode lead according to a distance value between the last two electrode leads and a set distance value, when the last electrode lead is the correct electrode lead, determining the distance between the mark hole on the electrode material of the Li-ion battery and the cutter assembly according to the distance between the last electrode lead and the cutter assembly and a set distance between the last electrode lead and the mark hole; according to the distance between the mark hole and the cutter assembly, controlling the cutter assembly to position and cut the electrode material.

In an example, wherein according to the distance between the mark hole and the cutter assembly, controlling the cutter assembly to position and cut the electrode material, comprises: according to the principle of making the cutting position corresponding to the mark hole stop within an effective movement range of a cutter compensation motor in the cutter assembly, controlling the electrode material to slow down and stop, and calculating a deceleration distance of the electrode material in the deceleration process; subtracting the deceleration distance from the distance between the mark hole and the cutter assembly to obtain a compensation distance; taking the compensation distance as a positioning distance of the cutter compensation motor, controlling the cutter compensation motor to drive the cutter assembly to move the compensation distance, and controlling the cutter assembly to clamp and cut the electrode material.

In an example, the last two electrode leads are located on both sides of the mark hole; or the last two electrode leads are located before the mark hole.

The controller in the Li-ion battery high-speed winding machine provided by examples of the present disclosure includes, at least one memory, to store a computer program; and at least one processor, to call the computer program stored in the at least one memory to perform the above mentioned cutting control method for the Li-ion battery high-speed winding machine.

The Li-ion battery high-speed winding machine includes the above mentioned cutting control system for the Li-ion battery high-speed winding machine.

The non-transitory computer-readable storage medium, on which a computer program is stored, the computer program is to be executed by a processor to implement the above mentioned cutting control method for the Li-ion battery high-speed winding machine.

In examples of the present disclosure, by combining the detection of an electrode lead distance and a mark hole, a distance between the mark hole and the cutter assembly is determined according to a mark signal or a correct last electrode lead in the winding process of the electrode material, and then the cutter assembly is controlled to position and cut the electrode material according to the distance between the mark hole and the cutter assembly. In this way, the cutting position can be located according to the mark signal when the electrode lead is folded, and the correct electrode lead can be used to locate the cutting position when the transverse alignment deviation is too large during the winding process of the battery core. Thus the double insurance of cutting positioning is realized, the cutting accuracy of the electrode material is improved, and then the product qualification rate of the battery core is improved.

The unnecessary interference can be reduced by setting the mark hole detection window on the path of the electrode material.

In addition, by taking the electrode leads on both sides of the mark hole as the last two electrode leads; or by taking the two electrode leads before the mark hole as the last two electrode leads, the scheme of positioning preferentially according to a mark hole or an electrode lead distance can be flexibly achieved.

### BRIEF DESCRIPTION OF THE DRAWINGS

For a better understanding of the present disclosure, reference should be made to the Detailed Description below, in conjunction with the following drawings in which like reference numerals refer to corresponding parts throughout the figures.
Figure 1 is a schematic diagram illustrating a mark hole and electrode leads on Li-ion battery electrode material.
Figure 2 is a schematic diagram illustrating a cutting system in a Li-ion battery high-speed winding machine according to an example of the present disclosure.
Figure 3 is a flow diagram illustrating a cutting control method for a Li-ion battery high-speed winding machine according to embodiments of the present disclosure.
Figure 4 is a flow diagram illustrating a cutting control method for the Li-ion battery high-speed winding machine according to an example of the present disclosure.
Figure 5 is a schematic diagram illustrating a controller in the Li-ion battery high-speed winding machine according to an example of the present disclosure.

The reference numerals are as follows:

| Reference numeral | Object |
|---|---|
| 1 | electrode material |
| 11 | mark hole |
| 12 | electrode lead |
| h | distance between two electrode leads |
| 21 | unwinder |
| 22 | feeding mechanism |
| 23 | dancer roller |
| 24 | external encoder |
| 25 | cutter assembly |
| 26 | rewinder axis |
| 27 | controller |
| 28 | first sensor |
| 29 | second sensor |
| 51 | storage |
| 52 | processor |
| 53 | bus |
| 301-303, 401A-408 | processes |

### DETAILED DESCRIPTION

At present, in order to improve the cutting accuracy of the electrode material, a photoelectric sensor is set in the material path of the positive and negative electrode materials to detect the electrode leads. Because the diameter of the Li-ion battery core is always increasing during the winding process, the distances between each two electrode leads are not equal. According to the craft requirement, the distance between two correct electrode leads can be obtained, and then the cutting position can be determined according to the positions of the correct electrode leads, and then cut the electrode material according to the cutting position. However, in the process of high-speed winding, the electrode lead may be turn over. If a correct electrode lead turns over, the distance of the correct electrode leads will not be measured, and then this battery core will be treated as a non-conforming product.

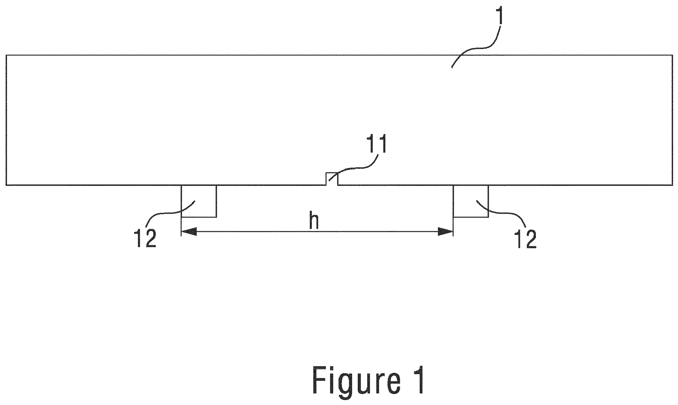

In embodiments of the present disclosure, it is considered that as shown in figure 1, there will be a mark hole 11 at the cutting position of the electrode material 1, which is located between two electrode leads 12. It is also considered that the detection error of mark hole11 is relatively small unless the lateral alignment deviation is too large in the process of winding the battery core. Therefore, in embodiments of the present disclosure, detection technology combining the mark hole and the distance h between two electrode leads is considered. By setting two photoelectric sensors for respectively detecting the mark hole 11 and the electrode leads 12, and simultaneously capturing the signal of the mark hole and the electrode leads on the electrode material, the cutting technology of the electrode material is further optimized and improved.

Reference will now be made in detail to examples, which are illustrated in the accompanying drawings. In the following detailed description, numerous specific details are set forth in order to provide a thorough understanding of the present disclosure. Also, the figures are illustrations of an example, in which modules or procedures shown in the figures are not necessarily essential for implementing the present disclosure. In other instances, well-known methods, procedures, components, and circuits have not been described in detail so as not to unnecessarily obscure aspects of the examples.

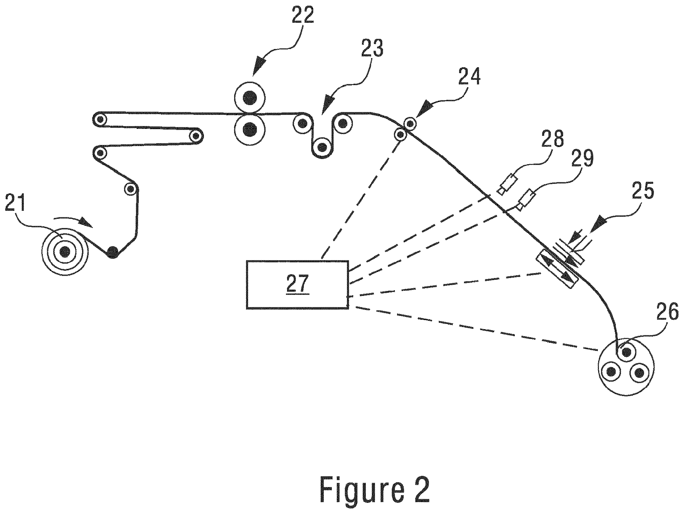

Figure 2 is a schematic diagram illustrating a cutting system in a Li-ion battery high-speed winding machine according to an example of the present disclosure. As shown in figure 2, the system may include an unwinder 21, a feeding mechanism 22, a dancer roller 23, an external encoder 24, a cutter assembly 25, a rewinder axis 26, a controller 27, and a first sensor 28 and a second sensor 29 set on the path through which the electrode material passes. The encoder 24, the cutter assembly 25, the rewinder axis 26, the first sensor 28 and the second sensor 29 are all electrically connected with the controller 27.

One end of the electrode material 1 on the unwinder 21 is fixed on the rewinder axis 26 so that the electrode material 1 on the unwinder 21 is wound on the rewinder axis 26 with the rotation of the rewinder axis 26.

The feeding mechanism 22 is constructed to feed the electrode material 1 on the unwinder 21 to the direction of the rewinder axis 26.

The dancer roller 23 is constructed to ensure the tension stability in the process of winding the electrode material 1, so that the tension fluctuation is within 10%.

The encoder 24 is constructed to measure the length of the electrode material 1 passed during the process of winding the electrode material 1, and to provide a measured value to the controller.

The first sensor 28 is constructed to detect the electrode leads 12 on the electrode material 1 and output a detected electrode lead signal to the controller 27.

The second sensor 29 is constructed to detect the mark hole 11 on the electrode material 1 at the cutting position, and to output a detected mark signal to the controller 27. In this embodiment, the mark signal can be configured as a measured input process object with a time stamp, and in a specific implementation, a detection window can be set according to the size of the mark hole to prevent the interference from causing false detection. The detection window can be set on the path through which the electrode material passes and corresponds to the position of the second sensor.

In this embodiment, the first sensor 28 and the second sensor 29 can be photoelectric sensors, or other sensors that can achieve the measured purpose, and they are not defined here.

In one example, the controller 27 can latch the measured value of the encoder 24 at the corresponding time for calculation when the first sensor 28 detects the last two electrode leads, and latch the measured value of encoder 24 at the corresponding time for calculation when the second sensor 29 detects the mark hole.

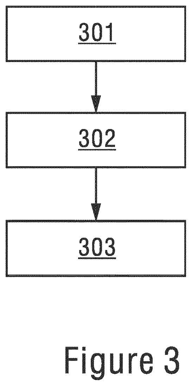

The controller 27 is constructed to receive the electrode material signal and the mark signal, determine the last two electrode leads according to the number of detected electrode lead signals, determine whether the last electrode lead is correct according to the distance value between the last two electrode leads, and determine the distance between the mark hole on the electrode material and the cutter assembly 25 according to the last correct electrode lead and / or the mark signal. According to the distance between the mark hole and the cutter assembly 25, control the cutter assembly 25 to position and cut the electrode material. For example, the control process may be as shown in figure 3, at block 301, the electrode lead signal is received from the first sensor 27 and the number of received electrode lead signals is counted. At block 302, when a mark signal is received before the number of received electrode lead signals reaches a set value, a distance between the mark hole on the electrode material of the Li-ion battery and the cutter assembly 25 is determined according to the mark signal; otherwise, when the number of received electrode lead signals reaches the set value, whether the last electrode lead is correct is determined according to the distance between the last two electrode leads and a set distance value, when the last electrode lead is correct, according to the distance between the last electrode lead and the cutter assembly 25 and a set distance between the last electrode lead and the mark hole, the distance between the mark hole on the electrode material of the Li-ion battery and the cutter assembly is determined. At block 303, according to the distance between the mark hole and the cutter assembly, the cutter assembly is controlled to position and cut the electrode material.

When implementing, the controller 27 may have various implementation modes of logical judgment. For example, the controller 27 can receive both the electrode lead signal and the mark signal, but cutting the electrode material based on the mark signal is preferred. When the mark signal is not detected, it may indicate that the lateral alignment deviation is too large in the battery core winding process. At this time, the electrode material cutting is performed based on the electrode lead signal. In this application mode, the last two electrode leads meeting the set number of electrode leads are located on both sides of the mark hole, so under normal conditions, the mark signal will be detected first, and then the correct distance between the electrode leads will be detected. When the detected distance between the last two electrode leads does not meet the requirements, or before the last electrode lead is detected, the mark hole is detected first, it indicates that an electrode lead may be turned over. At this time, the electrode material cutting is performed based on the mark signal. In this application mode, the last two electrode leads meeting the set number of electrode leads are located in front of the mark hole, so under normal conditions, the correct electrode lead distance is detected first, and then the mark signal is detected. In addition, the process of positioning and cutting the electrode material can also be various. For example, in one example, according to the principle that the cutting position corresponding to the mark hole stops within the effective moving range of the cutter compensation motor in the cutter assembly 25, the speed and acceleration of the rewinder axis 26 in the deceleration process can be calculated according to the set operating speed of the electrode material, and the rewinder axis 26 can be controlled to decelerate and stop according to the said speed and acceleration, and then the cutter assembly 25 can be controlled to move to the cutting position to cut the electrode material.

For example, in one example, the controller 27 can be specifically constructed to receive the electrode lead signal and the mark signal. When receiving an electrode lead signal, the controller 27 counts received electrode lead signals. When the count value reaches a set value before a mark signal is received, obtains an actual distance value between the last two electrode leads according to measured values of the encoder 24 corresponding to the last two electrode lead signals, when the difference between the actual distance value and a set distance value meets a first setting requirement, determines the last electrode lead to be the correct electrode lead. Then, according to the distance between the first sensor 28 (corresponding to the position of the last detected electrode lead) and the cutter assembly 25, and a predetermined position relationship between the mark hole 11 and the last detected electrode lead, the controller 27 calculates the distance between the mark hole 11 and the cutter assembly 25. When receiving the mark signal before the count value reaches the set value, the controller 27 obtains the actual length value of the electrode material before the mark hole according to the measured value of the encoder 24 corresponding to the mark signal. When the difference between the actual length value and a set length value meets a second setting requirement, the controller 27 takes the distance between the second sensor 29 (which corresponds to the position of the detected mark hole) and the cutter assembly 25 as the distance between the mark hole 11 and the cutter assembly 25.

After obtaining the distance between the mark hole and the cutter assembly 25, according to a principle of making the cutting position corresponding to the mark hole stop within an effective movement range of a cutter compensation motor in the cutter assembly 25, the controller 27 calculates a speed and acceleration of the rewinder axis 26 in the deceleration process according to the set running speed of the electrode material, and controls the rewinder axis 26 to decelerate and stop according to the speed and acceleration. After the rewinder axis 26 stops rotating, the controller 27 determines a movement distance of the electrode material from the deceleration to the stop of the rewinder axis 26 according to measured values of the encoder 24 when the rewinder axis 26 starts to decelerate and stops, and gets a deceleration distance; subtracts the deceleration distance from the distance between the mark hole and the cutter assembly 25 to obtain a compensation distance. The controller 27 takes the compensation distance as the positioning distance of the cutter compensation motor, and indicates the cutter compensation motor to control the cutter assembly 25 to move the compensation distance, clamp the electrode material and cut the electrode material.

In the above process, when a mark hole detection window is set, the processing of determining the actual length value of the electrode material before the mark hole according to the measured value of the encoder 24 corresponding to the mark signal, and comparing the actual length value with the set length value can be omitted.

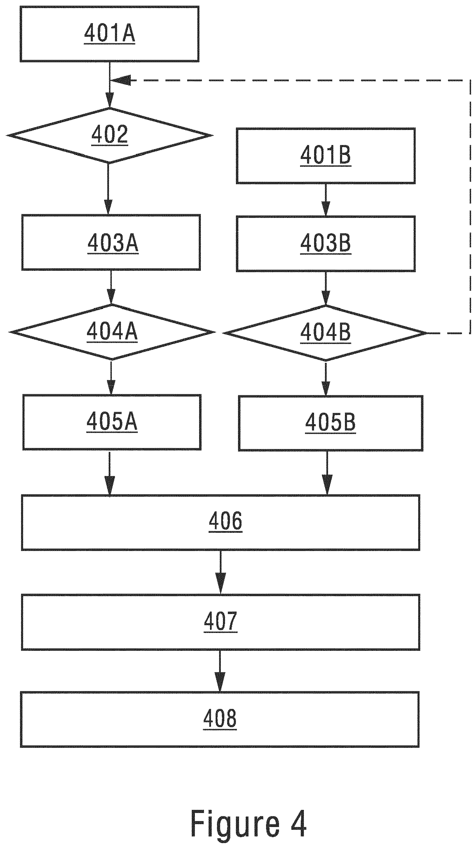

The control process in the above example can be shown in figure 4. Figure 4 is a flow diagram illustrating a cutting control method for the Li-ion battery high-speed winding machine according to an example of the present disclosure. The method may include the following processes.

At block 401A, an electrode lead signal is received from the first sensor 28, and the number of received electrode lead signals is counted. Then, block 302 is performed.

At block 401B, a mark signal is received from the second sensor 29. Then block 403B is performed.

In one example of this block, the second sensor 29 can detect the mark hole 11 through the detection window set in advance on the electrode material path. If the mark hole 11 cannot be detected through the inspection window, it may be that the transverse alignment deviation is too large during the process of winding the electrode material. At this time, the subsequent cutting processing can be performed based on the electrode lead signal. Otherwise, the subsequent cutting processing will be mainly based on the mark signal.

In another example, the second sensor 29 can directly detect the mark hole 11 without setting the detection window.

At block 402, it is determined that whether the number of received electrode lead signals reaches a set value? When the number of received electrode lead signals reaches the set value before the mark signal is received, block 403A is performed.

At this block, when the mark hole 11 is located between the last two electrode leads 12, the set value can be the number from the first electrode lead to the electrode lead behind the mark hole. When the mark hole 11 is located after the last two electrode leads 12, the set value can be the number from the first electrode lead to the electrode lead in front of the mark hole 11.

At block 403A, the actual distance value between the last two electrode leads 12 been counted is determined. Then, block 404A is performed.

At this block, when the first sensor 28 detects the last two electrode lead signals in turn, the measured values of the encoder 24 at the corresponding time can be obtained respectively, and the actual distance value between the last two electrode leads 12 can be calculated according to the measured values of the encoder 24 corresponding to the last two electrode lead signals.

At block 403B, the actual length value of the electrode material before the mark hole 11 is determined. Then block 404B is performed.

At this block, when the second sensor 29 detects the mark signal, the measured value of the encoder 24 at the corresponding time can be obtained, and the actual length value of the electrode material before the mark hole 11 can be obtained according to the measured value of the encoder 24 corresponding to the mark signal.

At block 404A, it is determined that whether a difference between the actual distance value and a set distance value meets a first setting requirement? When it meets the first setting requirement, block 405A is performed; otherwise, for the case that the mark hole 11 is located between the last two electrode leads 12, the battery core can be regarded as an unqualified product; for the case that the mark hole 11 is located after the last two electrode leads 12, continue to wait for block 401B to receive the following mark signal.

At this block, if the correct electrode lead turns over, when the count value reaches the set value, the actual distance between the last two electrode leads will have a large deviation from the set distance value.

At block 404B, it is determined that whether a difference between the actual length value and a set length value of the electrode material meets a second setting requirement? When it meets the second setting requirement, block 405B is then performed; otherwise, for the case that the mark hole 11 is located between the last two electrode leads 12, block 402 is then performed; for the case that the mark hole 11 is located after the last two electrode leads 12, the battery core can be regarded as an unqualified product.

In one embodiment, for example, when a mark hole detection window is set, the above blocks 403B and 404B can be omitted, that is, block 405B is directly executed after block 401B.

At block 405A, according to the distance between the first sensor 28 and the cutter assembly 25 and a pre-determined position relationship between the mark hole 11 and the last electrode lead 12 been counted, the distance between the mark hole 11 and the cutter assembly 25 is calculated. Block 306 is then performed.

At block 405B, the distance between the second sensor 29 and the cutter assembly 25 is taken as the distance between the mark hole 11 and the cutter assembly 25. Then block 406 is performed.

At block 406, according to the principle of making the cutting position corresponding to the mark hole stop within an effective movement range of the cutter compensation motor in the cutter assembly 25, the electrode material is controlled to slow down and stop, and calculate a deceleration distance of the electrode material in the deceleration process.

At this block, according to the principle of making the cutting position corresponding to the mark hole stop within the effective movement range of the cutter compensation motor in the cutter assembly 25, the speed and acceleration of the rewinder axis 26 in the deceleration process can be calculated according to the set running speed of the electrode material, and the rewinder axis 26 can be controlled to decelerate and stop according to the speed and acceleration. At the same time, the movement distance of the electrode material from the deceleration to the stop of the rewinder axis 26 is determined, and the deceleration distance is obtained.

In the case of electrode material cutting based on the mark signal, the time point when the rewinder axis 26 starts to decelerate corresponds to the time point when the mark hole is detected by the second sensor 29. In the case of electrode material cutting based on the electrode lead signal, the time point when the rewinder axis 26 starts to decelerate corresponds to the time point when the last electrode lead signal is detected by the first sensor 28. Accordingly, after the rewinder axis 26 stops rotating, according to the measured value of the encoder 24 when the rewinder axis 26 starts to decelerate and stops, the distance of the electrode material moving from the deceleration to the stop of the rewinder axis 26 can be determined, and the deceleration distance can be obtained.

At block 407, the deceleration distance is subtracted from the distance between the mark hole and the cutter assembly 25 to obtain a compensation distance.

At block 408, the compensation distance is taken as a positioning distance of the cutter compensation motor, the cutter compensation motor is controlled to drive the cutter assembly 25 to move the compensation distance, and then the cutter assembly 25 is controlled to clamp and cut the electrode material.

In fact, the controller 27 provided by this implementation manner of the present disclosure may be specifically implemented in various manners. For example, the controller 27 may be a Programmable logic controller (PLC), or may be compiled, by using an application programming interface that complies with a certain regulation, as a plug-in that is installed in an intelligent terminal, or may be encapsulated into an application program for a user to download and use. For example, the controller 27 can be integrated into CAE software as a plug-in, such as NX (Siemens).

When compiled as a plug-in, the controller 27 may be implemented in various plug-in forms such as ocx, dll, and cab. The controller 27 provided by this implementation manner of the present disclosure may also be implemented by using a specific technology, such as a Flash plug-in technology, a RealPlayer plug-in technology, an MMS plug-in technology, a MIDI staff plug-in technology, or an ActiveX plug-in technology.

The cutting control method for the Li-ion battery high-speed winding machine provided by this implementation manner of the present disclosure may be stored in various storage mediums in an instruction storage manner or an instruction set storage manner. These storage mediums include, but are not limited to: a floppy disk, an optical disc, a DVD, a hard disk, a flash memory, a USB flash drive, a CF card, an SD card, an MMC card, an SM card, a memory stick, and an xD card.

Moreover, it should be clear that an operating system operated in a computer can be made, not only by executing program code read by the computer from a storage medium, but also by using an instruction based on the program code, to implement some or all actual operations, so as to implement functions of any embodiment in the foregoing embodiments.

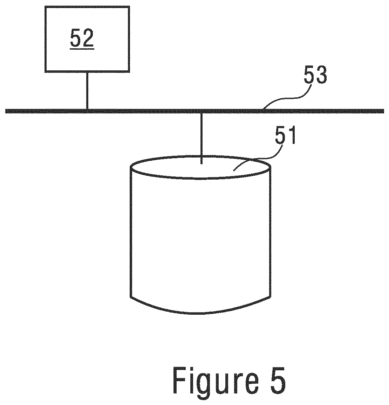

Figure 5 is a schematic diagram illustrating another controller according to examples of the present disclosure. The device may be used to perform the method shown in figure 3 or figure 4, or to implement the controller 27 in figure 2. As shown in figure 5, the device may include at least one memory 51 and at least one processor 52. In addition, some other components may be included, such as communication port, input/output controller, network communication interface, etc. These components communicate through bus 53, etc.

At least one memory 51 is configured to store a computer program. In addition, at least one memory 51 may store an operating system or the like. Operating systems include but are not limited to: Android operating system, Symbian operating system, windows operating system, Linux operating system, etc.

At least one processor 52 is configured to call the computer program stored in at least one memory 51 to perform a cutting control method for the Li-ion battery high-speed winding machine described in examples of the present disclosure. The processor 52 can be CPU, processing unit/module, ASIC, logic module or programmable gate array, etc. It can receive and send data through the communication port.

Specifically, at least one processor 52 is used to call the computer program stored in the at least one memory 51 to cause the controller to perform corresponding operations of the cutting control method for the Li-ion battery high-speed winding machine. The operations may include: receiving an electrode lead signal, and counting received electrode lead signals; when a mark signal is received before a count value reaches a set value, determining a distance between a mark hole on electrode material of the Li-ion battery and a cutter assembly in the high-speed winding machine of the Li-ion battery according to the mark signal; otherwise, when the count value reaches the set value, determining whether the last electrode lead is a correct electrode lead according to a distance value between the last two electrode leads and a set distance value, when the last electrode lead is the correct electrode lead, determining the distance between the mark hole on the electrode material of the Li-ion battery and the cutter assembly according to the distance between the last electrode lead and the cutter assembly and a set distance between the last electrode lead and the mark hole; according to the distance between the mark hole and the cutter assembly, controlling the cutter assembly to position and cut the electrode material.

In an example, wherein according to the distance between the mark hole and the cutter assembly, controlling the cutter assembly to position and cut the electrode material, comprises: according to the principle of making the cutting position corresponding to the mark hole stop within an effective movement range of a cutter compensation motor in the cutter assembly, controlling the electrode material to slow down and stop, and calculating a deceleration distance of the electrode material in the deceleration process; subtracting the deceleration distance from the distance between the mark hole and the cutter assembly to obtain a compensation distance; taking the compensation distance as a positioning distance of the cutter compensation motor, controlling the cutter compensation motor to drive the cutter assembly to move the compensation distance, and controlling the cutter assembly to clamp and cut the electrode material.

Wherein, the last two electrode leads are located on both sides of the mark hole; or the last two electrode leads are located before the mark hole.

In examples of the present disclosure, when the mark signal is caught, the position of external encoder will be recorded. At this time, the system command the rewinder axes motion at the absolute position which is equal to the record position and the distance between the second sensor and the cutter assembly. After that the cutter compensation motor motion the cutting position, and then cut the electrode material with the cutter valve. The signal of the electrode lead distance is only reference in this situation. If the correct electrode's lead turns over, the system will not make use of the signal of the electrode lead distance. On the contrary, the mark signal will be disabled and the signal of the electrode lead distance can be used if the mark signal is incorrect.

It should be understood that, as used herein, unless the context clearly supports exceptions, the singular forms "a" ("a", "an", "the") are intended to include the plural forms. It should also be understood that, "and / or" used herein is intended to include any and all possible combinations of one or more of the associated listed items.

The number of the embodiments of the present disclosure are only used for description, and do not represent the merits of the implementations.

The foregoing description, for purpose of explanation, has been described with reference to specific examples. However, the illustrative discussions above are not intended to be exhaustive or to limit the present disclosure to the precise forms disclosed. Many modifications and variations are possible in view of the above teachings. The examples were chosen and described in order to best explain the principles of the present disclosure and its practical applications, to thereby enable others skilled in the art to best utilize the present disclosure and various examples with various modifications as are suited to the particular use contemplated.

## Claims

1. A cutting control system for the Li-ion battery high-speed winding machine, comprising:
a cutter assembly (25) and a controller (27), wherein the cutter assembly (25) is
constructed to cut electrode material (1);
wherein the cutting control system further comprises a first sensor (28) and a
second sensor (29) set on a path through which the electrode material (1) passes;
the first sensor (28) is constructed to detect electrode leads (12) on the electrode material (1) and output a detected electrode lead signal to the controller (27);
the second sensor (29) is constructed to detect a mark hole on the electrode material (1) at the cutting position, and output a detected mark signal to the controller (27);
the controller (27) is constructed to receive the electrode material signal and the mark signal, determine the last two electrode leads according to the number of detected electrode lead signals, determine whether the last electrode lead is correct according to the distance value between the last two electrode leads, and determine the distance between the mark hole (11) on the electrode material and the cutter assembly (25) according to the last correct electrode lead and / or received mark signal; according to the distance between the mark hole (11) and the cutter assembly (25), control the cutter assembly (25) to position and cut the electrode material (1).

2. The cutting control system according to claim 1, wherein the last two electrode leads are located on both sides of the mark hole (11); or the last two electrode leads are located before the mark hole (11).

3. The cutting control system according to claim 2, further comprising an encoder (24) and a rewinder axis (26); wherein, the encoder is constructed to measure the length of the electrode material (1) passed during the process of winding the electrode material (1) and provide a measured value to the controller; the electrode material (1) is constructed to wind on the rewinder axis (26) with the rotation of the rewinder axis (26);
wherein the controller (27) is configured to count received electrode lead signals, and when a count value reaches a set value before receiving a mark signal, to obtain an actual distance value between the last two electrode leads according to measured values of the encoder (24) corresponding to the last two electrode lead signals, when the difference between the actual distance value and a set distance value meets a first setting requirement, to determine the last electrode lead to be a correct electrode lead; according to the distance between the first sensor (28) and the cutter assembly (25), and a predetermined position relationship between the mark hole (11) and the last detected electrode lead, to calculate the distance between the mark hole (11) and the cutter assembly (25); when receiving the mark signal before the count value reaches the set value, to obtain an actual length value of the electrode material before the mark hole according to the measured value of the encoder (24) corresponding to the mark signal; when the difference between the actual length value and a set length value meets a second setting requirement, to take a distance between the second sensor (29) and the cutter assembly (25) as the distance between the mark hole (11) and the cutter assembly (25); after obtaining the distance between the mark hole (11) and the cutter assembly (25), according to a principle of making the cutting position corresponding to the mark hole stop within an effective movement range of a cutter compensation motor in the cutter assembly (25), to calculate a speed and an acceleration of the rewinder axis (26) in the deceleration process according to the set running speed of the electrode material (1), and to control the rewinder axis (26) to decelerate and stop according to the speed and acceleration; after the rewinder axis (26) stops rotating, to determine a movement distance of the electrode material (1) from the deceleration to the stop of the rewinder axis (26) according to measured values of the encoder (24) when the rewinder axis (26) starts to decelerate and stops, and then gets a deceleration distance; to subtract the deceleration distance from the distance between the mark hole (11) and the cutter assembly (25) to obtain a compensation distance; to take the compensation distance as a positioning distance of the cutter compensation motor, and to indicate the cutter compensation motor to control the cutter assembly (25) to move the compensation distance, clamp the electrode material and cut the electrode material (1).

4. The cutting control system according to any one of claims 1 to 3, further comprising:
a mark hole detection window, which is set on the path through which the electrode material (1) passes and corresponds to the position of the second sensor (29); the second sensor (29) detects the mark hole on the electrode material through the detection window.

5. A cutting control method for the Li-ion battery high-speed winding machine, the method comprising:
receiving an electrode lead signal, and counting received electrode lead signals;
when a mark signal is received before a count value reaches a set value, determining a distance between a mark hole on electrode material of the Li-ion battery and a cutter assembly in the high-speed winding machine of the Li-ion battery according to the mark signal; otherwise, when the count value reaches the set value, determining whether the last electrode lead is a correct electrode lead according to a distance value between the last two electrode leads and a set distance value, when the last electrode lead is the correct electrode lead, determining the distance between the mark hole on the electrode material of the Li-ion battery and the cutter assembly according to the distance between the last electrode lead and the cutter assembly and a set distance between the last electrode lead and the mark hole;
according to the distance between the mark hole and the cutter assembly, controlling the cutter assembly to position and cut the electrode material.

6. The cutting control method according to claim 5, wherein according to the distance between the mark hole and the cutter assembly, controlling the cutter assembly to position and cut the electrode material, comprises:
according to the principle of making the cutting position corresponding to the mark hole stop within an effective movement range of a cutter compensation motor in the cutter assembly, controlling the electrode material to slow down and stop, and calculating a deceleration distance of the electrode material in the deceleration process;
subtracting the deceleration distance from the distance between the mark hole and the cutter assembly to obtain a compensation distance;
taking the compensation distance as a positioning distance of the cutter compensation motor, controlling the cutter compensation motor to drive the cutter assembly to move the compensation distance, and controlling the cutter assembly to clamp and cut the electrode material.

7. The cutting control method according to claim 5 or 6, wherein the last two electrode leads are located on both sides of the mark hole; or the last two electrode leads are located before the mark hole.

8. A controller in the Li-ion battery high-speed winding machine, wherein the controller comprises:
at least one memory, configured to store a computer program; and
at least one processor, configured to call the computer program stored in the at least one memory to perform a cutting control method for the Li-ion battery high-speed winding machine according to any one of claims 5 to 7.

9. A Li-ion battery high-speed winding machine, comprising: a cutting control system for the Li-ion battery high-speed winding machine according to any one of claims 1 to 4.

10. A non-transitory computer-readable storage medium, on which a computer
program is stored, wherein the computer program is to be executed by a processor to implement a cutting control method for the Li-ion battery high-speed winding machine according to any one of claims 5 to 7.
